# EUROPÄISCHE PATENTSCHRIFT

(11) **EP 4 061 603 B1**
(45) Veröffentlichungstag und Bekanntmachung des Hinweises auf die Patenterteilung: **23.10.2024**
(21) Anmeldenummer: 20811249.0
(22) Anmeldetag: 17.11.2020
(51) Int. Cl.: B29C 45/00, B29C 45/16, B29C 39/42, E05D 1/04, B29L 31/22

(54) **EINTEILIGES GUSSBAUTEIL MIT WENIGSTENS EINEM INTEGRIERTEN ANBAUTEIL UND VERFAHREN ZUM HERSTELLEN EINES GUSSBAUTEILS**
ONE-PIECE CAST COMPONENT HAVING AT LEAST ONE INTEGRATED ATTACHMENT PART, AND METHOD FOR PRODUCING A CAST COMPONENT
ÉLÉMENT MONOBLOC COULÉ DISPOSANT D'AU MOINS UNE PIÈCE DE FIXATION INTÉGRÉE, ET PROCÉDÉ DE PRODUCTION D'UN ÉLÉMENT COULÉ

(30) Priorität: 21.11.2019 DE 102019131396
(43) Veröffentlichungstag der Anmeldung: 28.09.2022
(73) Patentinhaber: Lisa Dräxlmaier GmbH, 84137 Vilsbiburg (DE)
(72) Erfinder: FELLNER, Walter, 5233 Pischelsdorf (AT); BULLOCK, Christoph Josef, 84326 Falkenberg (DE); DILENA, Maria, 5163 Mattsee (AT)
(86) Internationale Anmeldenummer: PCT/EP2020/082344
(87) Internationale Veröffentlichungsnummer: WO 2021/099294

(56) Entgegenhaltungen:
- EP-A1- 0 308 679
- US-A- 6 053 458
- US-A1- 2004 244 149
- US-A1- 2008 263 821

## Beschreibung

### Technisches Gebiet

Die vorliegende Erfindung betrifft ein einteiliges Gussbauteil mit wenigstens einem integrierten Anbauteil und ein Verfahren zum Herstellen eines derartigen Gussbauteils.

### Stand der Technik

Bei verschiedensten Bauteilen, wie beispielsweise Deckeln und dergleichen, ist es oftmals erforderlich, ein verschwenkbares Anbauteil, z.B. in Form einer Kappe, vorzusehen. Zum Beispiel kann es erforderlich sein, eine derartige Kappe so zu verschwenken, dass ein unterhalb der Kappe liegender Bereich freigegeben wird, zum Beispiel um eine Verschraubung oder dergleichen vorzunehmen. Insbesondere bei Kunststoffbauteilen ist es gängig, ein Filmscharnier vorzusehen, um eine derartige verschwenkbare Kappe zu realisieren. Ein dauerhaft funktionsfähiges Filmscharnier zu realisieren ist oftmals nicht einfach. Insbesondere müssen Materialauswahl, Konstruktion und Herstellparameter oftmals erst aufwendig eingestellt werden, um einen stabilen Serienprozess zu finden, mittels welchem ein dauerhaft funktionsfähiges Filmscharnier erzielt werden kann.

Je nach Randbedingungen kann es auch sein, dass solche Filmscharniere keine dauerhaft haltbare Lösung für eine verschwenkbare Kappe oder ein anderes verschwenkbares Anbauteil bieten können. Zudem werden solche Filmscharniere oftmals mit elastischen Materialien realisiert, zudem bei Spritzgussverfahren werkzeugseitig mittels Nadelverschlussdüsen und Kaskadensteuerungen umgesetzt. Soll bei solchen Anbauteilen eine gelenkige Verbindung zu einem restlichen Bauteil realisiert werden, ist es oftmals auch notwendig, bei einem Gusswerkzeug einen oder mehrere Schieber vorzusehen. Ganz allgemein werden bei beweglichen Elementen, wie sie bei Gelenken für solche Anbauteile notwendig sind, oftmals auch Elemente aus Elastomeren verwendet, da Elastomere relativ flexibel und elastisch sind. Derartige Elastomere sind allerdings auch oftmals verhältnismäßig teuer.

EP 0 308 679 A1 zeigt eine schwenkbare Henkelanordnung an einander gegenüberliegenden Vorsprüngen von Plastbehältern, die für die Spritzgießfertigung von Eimern und deren Henkel in einem Zyklus besonders geeignet ist. Wesentliches Merkmal der Lösung ist die zusätzliche Ausbildung eines inneren Zwischenstegs im Abstand zur Stirnwand des Vorsprungs, der das Gegenlager für den Lagerzapfen am Henkel bildet. Die einstückige Fertigung beider Teile wird durch gemeinsame Formmassefließwege unter Bildung von Materialfilmen zwischen dem Lagerzapfen sowie dem oberen Lager in der Stirnwand des Vorsprunges und/oder dem Gegenlager gesichert. Zusätzlich kann ein weiterer Materialfilm zwischen dem Lagerzapfen und dem Behälterrand in der Ebene eines vertikalen Anbindungssteges ausgebildet sein. Der nachträgliche Aufwand zur Henkelkomplettierung einzeln gefertigter Teile wird gemäß der Erfindung durch eine haltbare, nacharbeitsfreie Henkelaufnahme mit geringem werkzeugtechnischem Aufwand ersetzt.

US 2008/263821 A1 zeigt eine geformte Scharnierbaugruppe umfassend einen männlichen Teil, einen weiblichen Teil, der mit dem männlichen Teil eine Einheit bildet, eine Drehwelle, die mit dem männlichen Teil eine Einheit bildet, wobei die Drehwelle eine Vielzahl von Kanälen umfasst, die entlang einer Drehachse davon definiert sind. Die geformte Scharnierbaugruppe umfasst auch eine Vielzahl von Formeinsätzen, die an einem Schnittpunkt zwischen jedem jeweiligen Kanal und dem weiblichen Teil ausgebildet sind, wobei der weibliche Teil anschließend in Bezug auf den männlichen Teil drehbar ist, nachdem die Formeinsätze gebrochen sind. Während des Betriebs ist die Drehwelle nach der anschließenden Drehung des weiblichen Teils in den weiblichen Teil reibschlüssig eingepasst, um die Formschutzelemente zu brechen.

US 6 053 458 A zeigt ein Drehscharnier umfassend ein Drehelement mit Öffnungen und ein Basiselement mit einer Drehwelle, die in den Öffnungen drehbar gelagert ist. Die Öffnungen umfassen sich radial nach innen erstreckende Finger, die die Drehwelle positionieren und als Formangüsse für Formfenster ausgebildet sind, die gemeinsam für das anfängliche Formen des Basiselements und des Drehelements als ein einziges integrales Stück vorgesehen sind. Durch anschließende Drehung brechen die Formangüsse und die Überreste bilden die Finger.

US 2004/244149 A1 zeigt ein klappbares Produkt, welches einen ersten Abschnitt und einen zweiten Abschnitt hat. Der erste Abschnitt hat einen Pfosten, der sich quer über ein Ende davon erstreckt. Der zweite Abschnitt weist zwei koaxiale Öffnungen auf, wobei jede der Öffnungen eine Innenwand hat. Der Pfosten erstreckt sich zwischen und durch die Öffnungen, um den ersten Abschnitt mit dem zweiten Abschnitt zu verbinden. Mindestens ein Vorsprung befindet sich entweder am Pfosten oder an den Innenwänden der Öffnungen. Mindestens eine Rippe ist an der anderen der Innenwände oder am Pfosten angeordnet. Die Rippe berührt den Vorsprung, wenn der zweite Abschnitt relativ zum ersten Abschnitt gedreht wird, und bewirkt einen Widerstand gegen die Drehung. Dieser Widerstand ermöglicht eine stufenweise Drehung der beiden Abschnitte relativ zueinander. Je nach Anordnung der Öffnungen kann das Produkt in zahlreichen Konfigurationen platziert werden.

### Beschreibung der Erfindung

Es ist daher die Aufgabe der vorliegenden Erfindung, eine besonders einfache und haltbare Lösung bereitzustellen, mittels welcher an einem Gussbauteil ein integriertes und verschwenkbares Anbauteil realisiert werden kann.

Diese Aufgabe wird durch ein einteiliges Gussbauteil sowie durch ein Verfahren zum Herstellen eines solchen Gussbauteils mit den Merkmalen der unabhängigen Ansprüche gelöst. Weitere mögliche Ausgestaltungen der Erfindung sind insbesondere in den abhängigen Ansprüchen angegeben.

Das erfindungsgemäße einteilige Gussbauteil mit wenigstens einem integrierten Anbauteil umfasst wenigstens eine starr mit dem Anbauteil verbundene Achse sowie eine die Achse berührungslos und zumindest teilweise umgebende Einhausung. Die Achse ist in axialer Richtung zwischen zwei axialen Verbindungsstegen angeordnet und über diese starr mit der Einhausung verbunden. Des Weiteren ist die Achse in radialer Richtung zwischen mehreren radialen Verbindungsstegen angeordnet und über diese starr mit der Einhausung verbunden. Die axialen und radialen Verbindungsstege sind so dimensioniert, dass nur diese bei einem erstmaligen Verschwenken des Anbauteils relativ zur Einhausung an jeweiligen Sollbruchstellen brechen, wonach das Anbauteil mitsamt der Achse verschwenkbar gegenüber der Einhausung gelagert ist. Die nach dem Brechen an der Einhausung verbleibenden Bereiche der Verbindungsstege verhindern ein Entfernen der Achse aus der Einhausung.

Initial besteht das erfindungsgemäße Gussbauteil also aus einem einzigen Stück. Erst nach einem erstmaligen Verschwenken des integrierten Anbauteils relativ zur Einhausung brechen die Verbindungsstege an ihren Sollbruchstellen. Danach besteht das ursprünglich einteilige Gussbauteil aus zwei Teilen. Das Anbauteil ist nach wie vor starr mit der besagten Achse verbunden, wobei die Achse nicht mehr starr mit der Einhausung und somit auch nicht mehr mit den restlichen Gussbauteil verbunden ist. Die Achse und die Einhausung bilden mit anderen Worten also ein Gelenk mit einem einzigen Drehfreiheitsgrad, sodass das Anbauteil nach dem erstmaligen Verschwenken und Brechen beziehungsweise Cracken der Verbindungsstege ganz einfach relativ zur Einhausung und somit zum restlichen Gussbauteil verschwenkt werden kann. Die Achse und die Einhausung mitsamt den Verbindungsstegen bilden mit anderen Worten also ein Crackgelenk bzw. ein aufbrechbares Gelenk. Erst durch das Aufbrechen des Gussbauteils an definierten Stellen, nämlich an den besagten Sollbruchstellen der Verbindungsstege, kann das Anbauteil verschwenkt beziehungsweise bewegt werden. Insbesondere die Verbindungsstege sind so dimensioniert beziehungsweise gestaltet, dass die nach dem Brechen an der Einhausung verbleibenden Bereiche der Verbindungsstege ein Entfernen der Achse aus der Einhausung verhindern. Dadurch kann eine dauerhafte Funktionsweise des verschwenkbaren Anbauteils zuverlässig realisiert werden.

Durch die Verbindungsstege kann ein Gussmaterial, aus welchem das Gussbauteil einstückig beziehungsweise einteilig hergestellt wird, während eines Gussvorgangs insbesondere auch von der Einhausung zu der wenigstens einen Achse fließen. Mit anderen Worten dienen die Verbindungsstege also als Überläufer während des Gussvorgangs. Durch die Formgebung und Dimensionierung der Verbindungsstege werden die jeweiligen Sollbruchstellen sowie die entsprechend erforderlichen Aufbrechkräfte definiert. Nach dem Brechen der Verbindungsstege sorgt zudem auch die Einhausung dafür, dass die Achse zuverlässig in axialer Richtung und in radialer Richtung gelagert wird.

Bei dem Gussbauteil kann es sich beispielsweise um einen Deckel oder dergleichen für eine Platine handeln, wobei das Anbauteil beispielsweise dazu dienen kann, einen Pluspol oder Minuspol der Platine abzudecken und bei Bedarf freizugeben. Grundsätzlich kann es sich bei dem erfindungsgemäßen einteiligen Gussbauteil um beliebige Bauteile handeln, welche wenigstens ein integriertes Anbauteil aufweisen. Da das Gussbauteil einteilig beziehungsweise einstückig ausgebildet ist, kann eine aufwendige Montage des verschwenkbaren Anbauteils unterbleiben. Zudem kann das einteilige Gussbauteil aufgrund seiner einteiligen beziehungsweise einstückigen Gestaltung besonders einfach mittels eines Gussverfahrens hergestellt werden. Das Gussbauteil kann mittels eines einfach aufgebauten Werkzeugs hergestellt werden, was relativ geringe Werkzeugkosten aufweist, Insbesondere die Achse und die Einhausung können beispielsweise auch aus einem verstärkten Material hergestellt werden, sodass eine dauerhaft zuverlässige Verschwenkbarkeit des Anbauteils sichergestellt werden kann.

Eine mögliche Ausgestaltung der Erfindung sieht vor, dass zumindest die Achse, die Einhausung und die Verbindungsstege bezogen auf eine vorgegebene Entformrichtung aus einer Werkzeugform keine Hinterschnitte aufweisen. Das Crackgelenk bzw. das aufbrechbare Gelenk, welches die Achse, die Einhausung und die Verbindungsstege aufweist, weist also keine Hinterschnitte in besagter Entformrichtung auf, kann somit besonders einfach hergestellt werden. Es ist insbesondere auch möglich, dass das gesamte Gussbauteil bezogen auf die vorgegebene Entformrichtung aus der Werkzeugform keine Hinterschnitte aufweist. In dem Fall kann durch alleiniges Öffnen der betreffenden Werkzeugform das gesamte Gussbauteil also entnommen werden, ohne dass Schieber oder andere Mittel erforderlich sind und bewegt werden müssen. Dadurch kann das Gussbauteil mit geringen Werkzeugkosten besonders prozesssicher hergestellt werden. Jenseits des Crackgelenks, also beim Anbauteil und dem restlichen Gussbauteil, kann es Geometrien geben, die Schieber und/oder andere Mittel erfordern, um Hinterschnitte in diesen Bereichen zu realisieren. Auch ist es möglich, dass durch weitere Montageschritte noch andere Elemente am Gussbauteil angebracht werden.

Eine weitere mögliche Ausgestaltung der Erfindung sieht vor, dass das Gussbauteil einen Rastmechanismus aufweist, der dazu ausgelegt ist, das Anbauteil in zumindest einer vorgegebenen Verschwenkstellung zu halten. Der Rastmechanismus kann auch dazu ausgelegt sein, das Anbauteil in verschiedenen Verschwenkstellungen zu halten. So ist es beispielsweise denkbar, dass der Rastmechanismus dazu ausgelegt ist, das Anbauteil bezogen auf eine Ausgangsstellung in einem 90°-Winkel oder auch beispielsweise in einem 120°-Winkel zu halten. Bei Bedarf kann das Anbauteil also in die zumindest eine vorgegebene Verschwenkstellung bewegt werden, in der diese durch den Rastmechanismus gehalten wird. So kann beispielsweise eine unterhalb des Anbauteils vorzunehmende Verschraubung besonders einfach vorgenommen werden, ohne dass beispielweise ein Werker das Anbauteil in der vorgegebenen Verschwenkstellung halten muss.

Gemäß einer weiteren möglichen Ausgestaltung der Erfindung ist es vorgesehen, dass der Rastmechanismus eine Nase an der Achse umfasst, welche in der vorgegebenen Verschwenkstellung des Anbauteils mit einer Gegenkontur der Einhausung verrastet. Sollen mehrere Verschwenkstellungen realisiert werden, in denen der Rastmechanismus das Anbauteil halten kann, so können beispielsweise auch mehrere Nasen an der Achse und/oder Gegenkonturen an der Einhausung vorgesehen sein. Durch die wenigstens eine Nase und entsprechende Gegenkontur der Einhausung ist es auf besonders einfache Weise möglich, das Anbauteil in der zumindest einen vorgegebenen Verschwenkstellung zu halten. Beim Verrasten und auch beim Lösen des Rastmechanismus finden nur elastische Verformungen statt, sodass der Rastmechanismus immer wieder verwendet werden kann, insbesondere ohne dass dieser einen Schaden nimmt.

In weiterer möglicher Ausgestaltung der Erfindung ist es vorgesehen, dass das einteilige Gussbauteil aus einem Kunststoff, einem faserverstärkten Kunststoff und/oder aus einem Flammschutzmaterial hergestellt ist. Beispielsweise ist es möglich, dass das Gussbauteil aus einem Polybutylenterephthalat hergestellt wird. Beispielsweise ist es auch möglich, dass das Gussbauteil aus einem mit Glasfasern verstärkten Polybutylenterephthalat hergestellt wird. Auch andere Kunststoffe oder mit verschiedensten Zusatzstoffen versehene Kunststoffe können ebenfalls verwendet werden, um das einteilige Gussbauteil herzustellen.

Eine weitere mögliche Ausgestaltung der Erfindung sieht vor, dass das Gussbauteil zwei der Achsen aufweist, die axial beabstandet und fluchtend zueinander ausgerichtet sowie jeweils starr mit dem Anbauteil verbunden sind. In dem Fall weist die Einhausung zwei voneinander abgegrenzte Einhausungsbereiche auf, welche die Achsen jeweils berührungslos und zumindest teilweise umgeben. Zudem weist das Gussbauteil vier der axialen Verbindungsstege auf, wobei die Achsen jeweils in axialer Richtung zwischen zwei der axialen Verbindungsstege angeordnet und über diese starr mit den jeweiligen Einhausungsbereichen verbunden sind. Ferner sind die Achsen jeweils in radialer Richtung zwischen mehreren der radialen Verbindungsstege angeordnet und über diese starr mit den jeweiligen Einhausungsbereichen verbunden. Auch in dem Fall sind die Verbindungsstege so dimensioniert, dass diese bei einem erstmaligen Verdrehen der Achsen, also bei einem Verschwenken des Anbauteils, relativ zur Einhausung an jeweiligen Sollbruchstellen brechen und danach das Anbauteil mitsamt den Achsen verschwenkbar gegenüber der Einhausung gelagert ist, wobei die nach dem Brechen an den Einhausungsbereichen verbleibenden Bereiche der Verbindungsstege ein Entfernern der Achsen aus den Einhausungsbereichen verhindern. Je nach Größe des Anbauteils kann es vorteilhaft sein, die beiden besagten Achsen oder auch mehrere solcher Achsen vorzusehen. Nach dem Aufbrechen der Sollbruchstellen können die Achsen somit besonders zuverlässig verschwenkbar am restlichen Gussbauteil gelagert werden. Auch ist es beispielsweise möglich, an dem einteiligen Gussbauteil mehrere der Anbauteile vorzusehen, wobei diese wiederum jeweils zumindest in der bereits beschriebenen Weise mit einer jeweiligen Achse starr verbunden sein können, wobei die jeweiligen Achsen wiederum berührungslos und zumindest teilweise von einer jeweiligen Einhausung umgeben sein können.

Gemäß einer weiteren möglichen Ausgestaltung der Erfindung ist es vorgesehen, dass die Einhausungsbereiche durch einen gemeinsamen Mittenbereich der Einhausung voneinander getrennt und durch jeweilige Außenbereiche der Einhausung begrenzt sind, wobei auf einer Vorderseite des Gussbauteils die radialen Verbindungsstege ausschließlich an den Außenbereichen angeordnet und auf einer Rückseite des Gussbauteils die radialen Verbindungsstege ausschließlich an dem Mittenbereich angeordnet sind. Auf diese Weise ist es möglich, sicherzustellen, dass das Gussbauteil bezogen auf eine vorgegebene Entformrichtung aus einer Werkzeugform keine Hinterschnitte aufweist. Zudem ist es gleichermaßen möglich, nach dem Brechen beziehungsweise Cracken der jeweiligen Verbindungsstege an ihren Sollbruchstellen sicherzustellen, dass die Achsen nicht aus der Einhausung entfernt werden können. Eine Entfernung des Anbauteils kann z.B. aber durch Deformation des Anbauteils erzielt werden, wenn diese hinreichend flexibel bzw. verformbar ist. Auch nach dem Aufbrechen beziehungsweise Brechen der Verbindungsstege an ihren Sollbruchstellen kann also sichergestellt werden, dass das durch die Achsen und die Einhausung gebildete Gelenk dauerhaft zuverlässig eine Verschwenkbewegung des Anbauteils ermöglicht, und zwar ohne dass das Anbauteil von dem restlichen Gussbauteil entfernt werden kann.

Bei dem erfindungsgemäßen Verfahren zum Herstellen des erfindungsgemäßen Gussbauteils oder einer möglichen Ausgestaltung des erfindungsgemäßen Gussbauteils wird wenigstens ein Gussmaterial in eine zwischen zwei Formhälften eingeschlossene Kavität eingeleitet und unter Aushärtung des wenigstens einen Gussmaterials das Gussbauteil hergestellt, wobei zumindest die Achse, die Einhausung und die Verbindungsstege bezogen auf eine vorgegebene Entformrichtung ohne Hinterschnitte hergestellt werden. Die Kavität und das Gussbauteil sind also so gestaltet, dass wenigstens das Crackgelenk z.B. ohne die Verwendung von Schiebern hergestellt werden kann. Auch sind beispielsweise keine Schrägauswerfer, federnde Auswerfer oder Losteile im Bereich des Crackgelenks erforderlich. Auch kann beispielsweise eine Zwangsentformung beim Gussbauteil im Bereich des Crackgelenks entfallen. Insbesondere können die Formhälften und das gesamte Gussbauteil so gestaltet sein, dass das gesamte Gussbauteil bezogen auf die vorgegebene Entformrichtung nach dem Öffnen der beiden Formhälften einfach aus diesen entnommen werden kann, das gesamte Gussbauteil also keine Hinterschnitte bezüglich der vorgegebenen Entformrichtung aufweist. Mittels des erfindungsgemäßen Verfahrens ist es möglich, das einteilige Gussbauteil besonders einfach und prozesssicher herzustellen, wobei das dabei verwendete Gusswerkzeug besonders einfach aufgebaut sein kann. Jenseits des Crackgelenks, also beim Anbauteil und dem restlichen Gussbauteil, kann es Geometrien geben, die Schieber und/oder andere Mittel erfordern, um in diesen Bereichen z.B. Hinterschnitte herzustellen. Auch ist es möglich, dass durch weitere Montageschritte noch andere Elemente am Gussbauteil angebracht werden.

Eine mögliche Ausgestaltung des erfindungsgemäßen Verfahrens sieht vor, dass das Gussbauteil mittels eines Spritzguss- oder Vakuumgussverfahrens hergestellt wird. Mittels Spritzgussverfahren ist es möglich, das Gussbauteil zuverlässig und kostengünstig in Großserie, also in besonders hohen Stückzahlen, herzustellen. Mittels Vakuumgussverfahren ist es insbesondere möglich, kleine Stückzahlen des Gussbauteils schnell und kostengünstig herzustellen.

Schließlich sieht eine weitere mögliche Ausgestaltung des erfindungsgemäßen Verfahrens vor, dass das Gussbauteil aus einem ersten und zweiten Gussmaterial hergestellt wird, welche unterschiedliche Eigenschaften aufweisen. Die beiden Gussmaterialien können also aus unterschiedlichen Materialien bestehen. Unter unterschiedlichen Eigenschaften kann beispielsweise verstanden werden, dass die Gussmaterialien insbesondere im ausgehärteten Zustand unterschiedliche mechanische, thermische und/oder farbliche Eigenschaften aufweisen. Das erste Gussmaterial wird an einer ersten Stelle der Kavität zugeführt, welche entfernt von dem herzustellenden Anbauteil angeordnet ist, wobei das zweite Gussmaterial an einer zweiten Stelle der Kavität zugeführt wird, welche im Bereich des herzustellenden Anbauteils angeordnet ist. Das Einleiten der Gussmaterialien wird so gesteuert, dass jeweilige Fließfronten der Gussmaterialien in einem Bereich des Gussbauteils fernab des Anbauteils aufeinandertreffen. Durch die als Überläufer dienenden Verbindungsstege ist es dabei möglich, dass das zweite Gussmaterial von dem herzustellenden Anbauteil in den restlichen Bereich des Gussbauteils fließt. Durch die Verwendung der hinsichtlich ihrer Eigenschaften unterschiedlichen beiden Gussmaterialien ist es möglich, das Anbauteil auf ganz einfache Weise z.B. in einer anderen Farbe und/oder mit anderen mechanischen und/oder thermischen Eigenschaften als das restliche Gussbauteil herzustellen. Beispielsweise kann eine Kaskadensteuerung verwendet werden, um das Aufeinandertreffen der besagten Fließfronten der unterschiedlichen Gussmaterialien in einen ganz bestimmten gewünschten Bereich zu verschieben, beispielsweise in die Achse. Alternativ oder zusätzlich ist es möglich, mittels Sperrschiebern das Aufeinandertreffen der beiden unterschiedlichen Gussmaterialien an definierten Stellen zu realisieren. Es ist aber auch möglich, bei der Herstellung des Gussbauteils nur einen einzigen Anspritzpunkt oder auch mehr als zwei Anspritzpunkte vorzusehen.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine Perspektivansicht eines Gussbauteils mit einer integrierten Kappe;
- Fig. 2: eine Detailansicht einer Vorderseite des Gussbauteils im Bereich zweier Achsen, mit denen die Kappe starr verbunden ist;
- Fig. 3: eine Detailansicht einer Rückseite des Gussbauteils, wiederum in dem Bereich, wo die Kappe starr mit den beiden Achsen verbunden ist;
- Fig. 4: eine schematische Darstellung eines Gussvorgangs zum Herstellen des Gussbauteils.

In den Figuren sind gleiche oder funktionsgleiche Elemente mit den gleichen Bezugszeichen versehen worden.

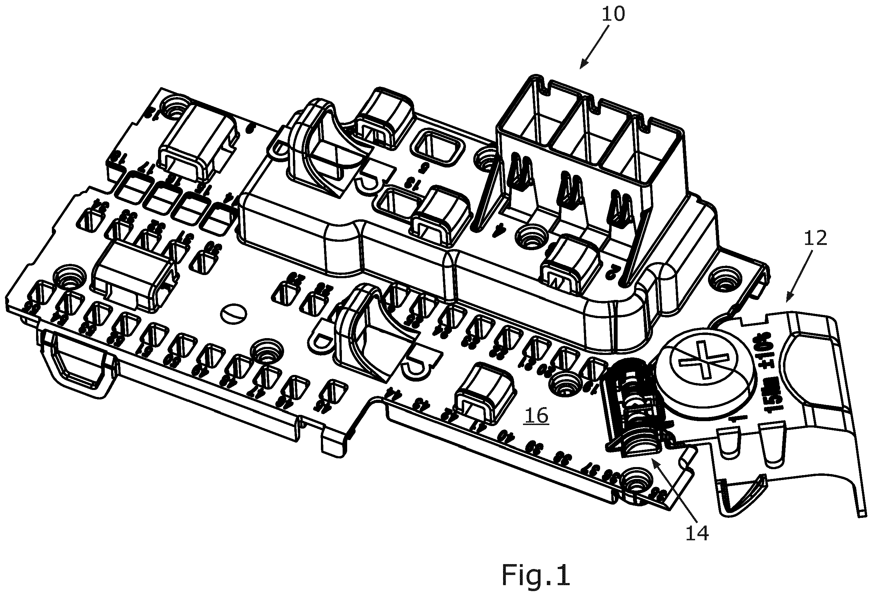

Ein Gussbauteil 10 mit einer integrierten Kappe 12 ist in einer Perspektivansicht in Fig. 1 gezeigt. Nachfolgend ist immer die Rede von der Kappe 12. Die nachfolgenden Erläuterungen gelten auch für beliebige andere integrierte Anbauteile, sind also nicht auf kappenartige Anbauteile beschränkt. Nach dem Herstellen des Gussbauteils 10 ist dieses zunächst einteilig beziehungsweise einstückig ausgebildet. Mit anderen Worten handelt es sich bei dem restlichen Gussbauteil 10 und der Kappe 12 nicht um zwei Teile, sondern um ein einziges Teil. Durch erstmaliges Verschwenken der integrierten Kappe 12 gegenüber dem restlichen Gussbauteil 10 werden hier nicht näher gekennzeichnete Sollbruchstellen aufgebrochen beziehungsweise gecrackt, in Folge dessen ein Gelenk 14 ausgebildet wird.

Nach dem erstmaligen Verschwenken der Kappe 12 gegenüber dem restlichen Gussbauteil 10 und dem entsprechenden Aufbrechen der besagten Sollbruchstellen ist das Gussbauteil 10 mit der integrierten Kappe 12 also nicht mehr einstückig beziehungsweise einteilig ausgebildet, stattdessen ist das Gussbauteil 10 danach zweiteilig ausgebildet. Bei dem Gussbauteil 10 kann es sich beispielsweise um eine Abdeckung, einen Deckel, eine Schutzkappe oder dergleichen handeln. Im montierten Zustand des Gussbauteils 10 kann die Kappe 12 beispielsweise dazu dienen, einen Pluspol oder dergleichen freizugeben, wenn die Kappe 12 nach oben geschwenkt wird.

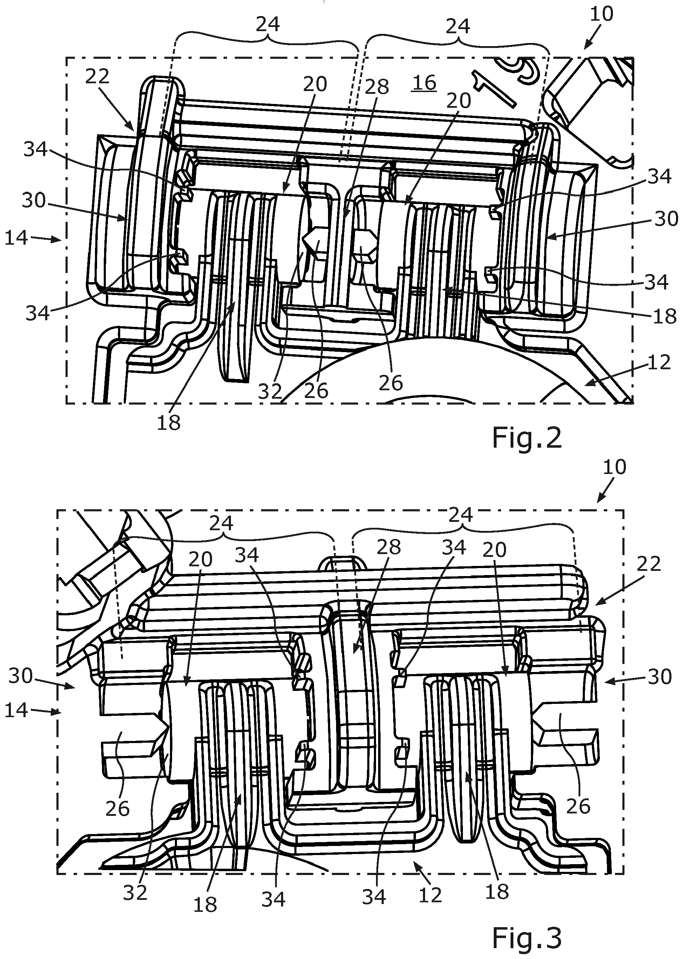

In Fig. 2 ist eine Vorderseite 16 des Gussbauteils 10 im Bereich des ausbildbaren Gelenks 14 in einer Draufsicht gezeigt. Die Kappe 12 ist über jeweilige Fortsätze 18 starr mit jeweiligen Achsen 20 verbunden. Eine Einhausung 22 umgibt die Achsen 20 teilweise und berührungslos. Das Gussbauteil 10 weist also die beiden Achsen 20 auf, die axial beabstandet und fluchtend zueinander ausgerichtet sind, wobei die beiden Achsen 20 jeweils starr unter Vermittlung der beiden Fortsätze 18 mit der Kappe 12 verbunden sind. Die Einhausung 22 weist zwei voneinander abgegrenzte Einhausungsbereiche 24 auf, welche die jeweiligen Achsen 20 berührungslos und zumindest teilweise umgeben.

Das Gussbauteil 10 weist vier axiale Verbindungsstege 26 auf, wobei vorliegend nur zwei der Verbindungsstege 26 zu erkennen sind. Die Einhausungsbereiche 24 sind durch einen gemeinsamen Mittenbereich 28 voneinander getrennt und durch jeweilige Außenbereiche 30 der Einhausung 22 begrenzt. Wie vorliegend zu erkennen, erstrecken sich zwei der axialen Verbindungsstege 26 in entgegengesetzte axiale Richtung von dem Mittenbereich 28 in Richtung der jeweiligen Einhausungsbereiche 24 und sind starr mit jeweiligen Stirnseiten 32 der Achsen 20 verbunden. Die Achsen 20 sind zudem jeweils in radialer Richtung zwischen mehreren radialen Verbindungsstegen 34 angeordnet und über diese starr mit den jeweiligen Einhausungsbereichen 24 verbunden.

In Fig. 3 ist eine Rückseite 36 des Gussbauteils 10 gezeigt, wiederum im Bereich des herstellbaren Gelenks 14. In der vorliegenden Darstellung kann man noch die weiteren axialen Verbindungsstege 26 erkennen, welche sich von den jeweiligen Außenbereichen 30 der Einhausung 22 in axialer Richtung in Richtung der jeweiligen Achsen 20 erstrecken und wiederum starr mit zugehörigen Stirnseiten 32 der Achsen 20 verbunden sind. Die Achsen 20 sind also jeweils in axialer Richtung zwischen zwei der axialen Verbindungsstege 26 angeordnet und über diese starr mit den jeweiligen Einhausungsbereichen 24 verbunden. Vorliegend kann man auch noch weitere radiale Verbindungsstege 34 erkennen, über welche die Achsen 20 starr mit den jeweiligen Einhausungsbereichen 24 verbunden sind.

Vergleicht man die Abbildungen in den Figuren 2 und 3 kann man erkennen, dass an der Vorderseite 16 des Gussbauteils 10 (siehe Fig. 2) die radialen Verbindungsstege 34 ausschließlich an den Außenbereichen 30 der Einhausung 22 angeordnet sind. An der Rückseite 36 des Gussbauteils 10 (siehe Fig. 3) sind hingegen die radialen Verbindungsstege 34 ausschließlich an dem Mittenbereich 28 angeordnet. Das gesamte Gussbauteil 10 kann bezogen auf eine vorgegebene Entformrichtung dadurch ganz einfach aus einer Werkzeugform entnommen werden, da insbesondere die radialen Verbindungsstege 34 in der besagten Entformrichtung keine Hinterschnitte bilden.

Wie bereits im Zusammenhang mit Fig. 1 erläutert, ist das Gussbauteil 10 nach dessen Herstellung zunächst einteilig beziehungsweise einstückig ausgebildet. Mit anderen Worten ist die Kappe 12 also initial starr und einstückig mit dem restlichen Gussbauteil 10 verbunden. Um das erwähnte Gelenk 14 zu realisieren, muss die Kappe 12 nach dem Herstellen des Gussbauteils 10 einfach nur relativ zur Einhausung 22 verschwenkt werden. Die axialen Verbindungsstege 26 und die radialen Verbindungsstege 34 sind so dimensioniert, dass nur diese beim erstmaligen Verschwenken der Kappe 12 relativ zur Einhausung 22 an jeweiligen Sollbruchstellen brechen.

Danach ist die Kappe 12 mitsamt den Achsen 20 verschwenkbar gegenüber der Einhausung 22 und somit verschwenkbar gegenüber dem restlichen Gussbauteil 10 gelagert. Die Achsen 20 bilden gemeinsam mit der Einhausung 22, mit der die Achsen 20 nach dem Aufbrechen beziehungsweise Cracken der Verbindungsstege 26, 34 nicht mehr verbunden sind, also das besagte Gelenk 14. Nach dem Brechen der Verbindungsstege 26, 34 an besagten Sollbruchstellen, sorgen die Einhausung 22 und die nach dem Brechen an der Einhausung 22 noch verbleibenden Bereiche der Verbindungsstege 26, 34 dafür, dass die Achsen 20 nicht aus der Einhausung 22 beziehungsweise den Einhausungsbereichen 24 entfernt werden können. Die Kappe 12 ist also zwar dauerhaft und zuverlässig mit dem restlichen Gussbauteil 10 verbunden, wobei diese durch Ausbildung des Gelenks 14 bei Bedarf immer wieder gegenüber dem restlichen Gussbauteil 10 verschwenkt werden kann.

Das Gussbauteil 10 kann zudem einen hier nicht näher dargestellten Rastmechanismus aufweisen, der dazu ausgelegt ist, die Kappe 12 in zumindest einer vorgegebenen Verschwenkstellung zu halten. Beispielsweise kann der Rastmechanismus eine hier nicht näher dargestellte Nase an den jeweiligen Achsen 20 aufweisen, die in der vorgegebenen Verschwenkstellung der Kappe 12 mit einer entsprechenden Gegenkontur der Einhausung 22 verrasten können. Der Rastmechanismus kann auch so ausgebildet sein, dass dieser die Kappe 12 in unterschiedlichen Verschwenkstellungen halten werden kann. So ist es beispielsweise möglich, die Kappe 12 ausgehend von der in Fig. 1 gezeigten Ausgangsstellung um 90° oder beispielsweise auch um 120° zu öffnen, wobei die Kappe 12 in diesen Stellungen durch besagten Rastmechanismus gehalten werden kann.

Das Gussbauteil 10 kann insbesondere aus einem Kunststoff, einem faserverstärkten Kunststoff und/oder aus einem Flammschutzmaterial hergestellt werden. Beispielsweise kann das Gussbauteil 10 aus Polybutylenterephthalat hergestellt werden und/oder beispielsweise aus einem mit Glasfasern verstärkten Polybutylenterephthalat. Andere Kunststoffe mit entsprechend versehenen Zusatzstoffen können ebenfalls verwendet werden, um das Gussbauteil 10 herzustellen.

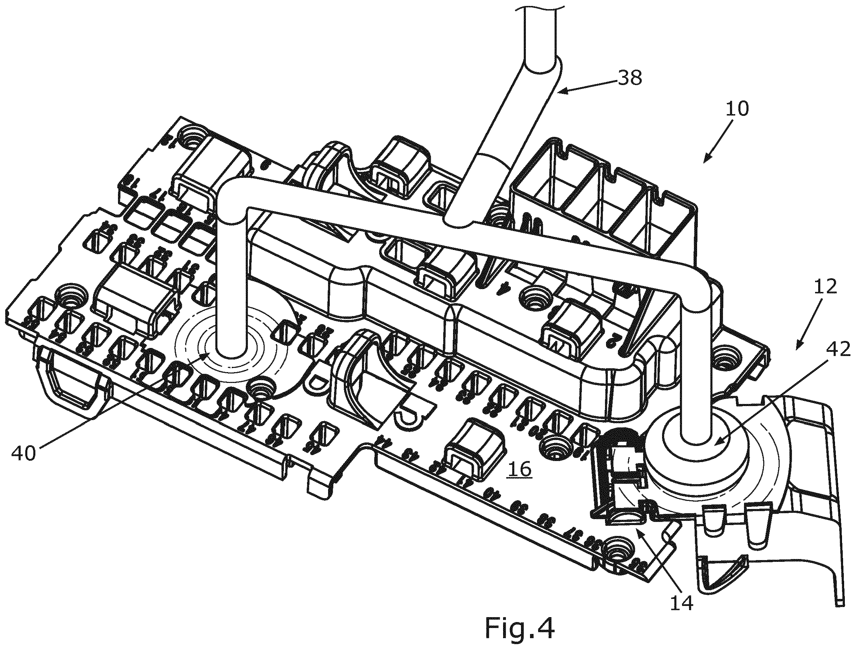

In Fig. 4 ist ein Gussvorgang zum Herstellen des Gussbauteils 10 schematisch dargestellt. In der vorliegenden Darstellung ist ein Angusssystem 38 zu erkennen, mittels welchem zwei Gussmaterialien, die unterschiedliche Farben aufweisen, einer nicht näher dargestellten und gekennzeichneten Kavität zugeführt werden können. Alternativ oder zusätzlich können sich die Gussmaterialien hinsichtlich weiterer Eigenschaften voneinander unterscheiden, z.B. unterschiedliche mechanische und/oder thermische Eigenschaften aufweisen.

Für eine bessere Verständlichkeit wird nachfolgend beispielhaft nur darauf eingegangen, dass die Gussmaterialien sich hinsichtlich ihrer Farbe unterscheiden. Auf diese Weise ist es möglich, die Kappe 12 in einer anderen Farbe auszubilden als das restliche Gussbauteil 10. Über das Angusssystem 38 kann ein erstes Gussmaterial an einer ersten Stelle 40 der besagten Kavität zugeführt werden, welche entfernt von der herzustellenden Kappe 12 angeordnet ist. Mittels des Angusssystems 38 kann ein zweites Gussmaterial, welches eine andere Farbe als das erste Gussmaterial aufweist, an einer zweiten Stelle 42 der Kavität zugeführt werden, welche im Bereich der herzustellenden Kappe 12 angeordnet ist. Das Einleiten der Gussmaterialien mit den unterschiedlichen Farben kann insbesondere so gesteuert werden, dass jeweilige hier nicht näher dargestellte Fließfronten der unterschiedlichen Gussmaterialien in einem Bereich des Gussbauteils 10 fernab der Kappe 12 aufeinandertreffen. Beispielsweise kann eine Kaskadensteuerung verwendet werden, um dies sicherzustellen. So ist es beispielsweise möglich, das Einleiten der Gussmaterialien, welche die unterschiedlichen Farben aufweisen, so zu steuern, dass besagte Fließfronten der beiden Gussmaterialien genau im realisierbaren Gelenk 14 aufeinandertreffen. So ist es möglich, die Kappe 12 sauber farblich von dem restlichen Gussbauteil 10 abzugrenzen.

Beim Herstellen des Gussbauteils 10 kann insbesondere ein schieberloses Werkzeug verwendet werden. Denn wie bereits erwähnt, kann das Gussbauteil 10 so gestaltet sein, dass es bezogen auf eine vorgegebene Entformrichtung aus einer Werkzeugform keine Hinterschnitte aufweist. Beispielsweise ist es auch möglich, bei einer oberen Werkzeughälfte und/oder einer unteren Werkzeughälfte jeweilige Werkzeugeinsätze vorzusehen, welche die Kontur des Gussbauteils 10 definieren. Durch Verwendung besagter Werkzeugeinsätze, die wechselbar ausgestaltet sind, ist es auf einfache Weise möglich, unterschiedlichste Konturen beziehungsweise Formen bei dem Gussbauteil 10 zu realisieren. Alternativ oder zusätzlich ist es so auch möglich, die besagten Werkzeugeinsätze einfach auszuwechseln, wenn diese verschlissen sind. Dies kann sich insbesondere dann anbieten, wenn ein Spritzgusswerkzeug zur Herstellung des Gussbauteils 10 verwendet wird. Alternativ ist es auch möglich, das Gussbauteil 10 beispielsweise mittels eines Vakuumgussverfahrens herzustellen. Dies kann sich insbesondere dann anbieten, wenn das Gussbauteil 10 in relativ geringen Stückzahlen hergestellt wird, wohingegen ein Spritzgussverfahren sich insbesondere bei hohen Stückzahlen anbietet.

### BEZUGSZEICHENLISTE

- 10: Gussbauteil
- 12: Anbauteil in Form einer Kappe
- 14: Gelenk
- 16: Vorderseite des Gussbauteils
- 18: Fortsätze
- 20: Achsen
- 22: Einhausung
- 24: Einhausungsbereiche der Einhausung
- 26: axiale Verbindungsstege
- 28: Mittenbereich der Einhausung
- 30: Außenbereiche der Einhausung
- 32: Stirnseiten der Achsen
- 34: radiale Verbindungsstege
- 36: Rückseite des Gussbauteils
- 38: Angusssystem
- 40: erste Stelle der Kavität
- 42: zweite Stelle der Kavität

## Patentansprüche

1. Einteiliges Gussbauteil (10) mit wenigstens einem integrierten Anbauteil (12), umfassend
- wenigstens eine starr mit dem Anbauteil (12) verbundene Achse (20);
- eine die Achse (20) berührungslos und zumindest teilweise umgebende Einhausung (22);
- wobei die Achse (20) in axialer Richtung zwischen zwei axialen Verbindungsstegen (26) angeordnet und über diese starr mit der Einhausung (22) verbunden ist;
- wobei die Achse (20) in radialer Richtung zwischen mehreren radialen Verbindungsstegen (34) angeordnet und über diese starr mit der Einhausung (22) verbunden ist;
- wobei die Verbindungsstege (26, 34) so dimensioniert sind, dass nur diese bei einem erstmaligen Verschwenken des Anbauteils (12) relativ zur Einhausung (22) an jeweiligen Sollbruchstellen brechen und danach das Anbauteil (12) mitsamt der Achse (20) verschwenkbar gegenüber der Einhausung (22) gelagert ist, wobei die nach dem Brechen an der Einhausung (22) verbleibenden Bereiche der Verbindungstege ein Entfernen der Achse (20) aus der Einhausung (22) verhindern.

2. Einteiliges Gussbauteil (10) nach Anspruch 1,
**dadurch gekennzeichnet, dass**
zumindest die Achse (20), die Einhausung (22) und die Verbindungsstege (26, 34) bezogen auf eine vorgegebene Entformrichtung aus einer Werkzeugform keine Hinterschnitte aufweisen.

3. Einteiliges Gussbauteil (10) nach Anspruch 1 oder 2,
**dadurch gekennzeichnet, dass**
das Gussbauteil (10) einen Rastmechanismus aufweist, der dazu ausgelegt ist, das Anbauteil (12) in zumindest einer vorgegebenen Verschwenkstellung zu halten.

4. Einteiliges Gussbauteil (10) nach Anspruch 3,
**dadurch gekennzeichnet, dass**
der Rastmechanismus eine Nase an der Achse (20) umfasst, welche in der vorgegebenen Verschwenkstellung des Anbauteils (12) mit einer Gegenkontur der Einhausung (22) verrastet.

5. Einteiliges Gussbauteil (10) nach einem der vorhergehenden Ansprüche, **dadurch gekennzeichnet, dass**
das einteilige Gussbauteil (10) aus einem Kunststoff, einem faserverstärkten Kunststoff und/oder aus einem Flammschutzmaterial hergestellt ist.

6. Einteiliges Gussbauteil (10) nach einem der vorhergehenden Ansprüche, **dadurch gekennzeichnet, dass**
- das Gussbauteil (10) zwei der Achsen (20) aufweist, die axial beabstandet und fluchtend zueinander ausgerichtet sowie jeweils starr mit dem Anbauteil (12) verbunden sind;
- die Einhausung (22) zwei voneinander abgegrenzte Einhausungsbereiche (24) aufweist, welche die Achsen (20) jeweils berührungslos und zumindest teilweise umgeben;
- das Gussbauteil (10) vier der axialen Verbindungsstege (26) aufweist, wobei die Achsen (20) jeweils in axialer Richtung zwischen zwei der axialen Verbindungsstege (26) angeordnet und über diese starr mit den jeweiligen Einhausungsbereichen (24) verbunden sind;
- die Achsen (20) jeweils in radialer Richtung zwischen mehreren der radialen Verbindungsstege (34) angeordnet und über diese starr mit den jeweiligen Einhausungsbereichen (24) verbunden sind.

7. Einteiliges Gussbauteil (10) nach Anspruch 6,
**dadurch gekennzeichnet, dass**
- die Einhausungsbereiche (24) durch einen gemeinsamen Mittenbereich (28) der Einhausung (22) voneinander getrennt und durch jeweilige Außenbereiche (30) der Einhausung (22) begrenzt sind;
- auf einer Vorderseite (16) des Gussbauteils (10) die radialen Verbindungsstege (34) ausschließlich an den Außenbereichen (30) angeordnet sind;
- auf einer Rückseite (36) des Gussbauteils (10) die radialen Verbindungsstege (34) ausschließlich an dem Mittenbereich (28) angeordnet sind.

8. Verfahren zum Herstellen eines Gussbauteils (10) mit einem integrierten Anbauteil (12) nach einem der vorhergehenden Ansprüche, bei welchem wenigstens ein Gussmaterial in eine zwischen zwei Formhälften eingeschlossene Kavität eingeleitet und unter Aushärtung des wenigstens einen Gussmaterials das Gussbauteil (10) hergestellt wird, wobei zumindest die Achse (20), die Einhausung (22) und die Verbindungsstege (26, 34) bezogen auf eine vorgegebene Entformrichtung ohne Hinterschnitte hergestellt werden.

9. Verfahren nach Anspruch 8,
**dadurch gekennzeichnet, dass**
das Gussbauteil (10) mittels eines Spritzguss- oder Vakuumgussverfahrens hergestellt wird.

10. Verfahren nach Anspruch 8 oder 9,
**dadurch gekennzeichnet, dass**
- das Gussbauteil (10) aus einem ersten und zweiten Gussmaterial hergestellt wird, welche unterschiedliche Eigenschaften aufweisen;
- das erste Gussmaterial an einer ersten Stelle (40) der Kavität zugeführt wird, welche entfernt von der herzustellenden Anbauteil (12) angeordnet ist;
- das zweite Gussmaterial an einer zweiten Stelle (42) der Kavität zugeführt wird, welche im Bereich der herzustellenden Anbauteil (12) angeordnet ist;
- das Einleiten der Gussmaterialien so gesteuert wird, dass jeweilige Fließfronten der Gussmaterialien in einem Bereich des Gussbauteils (10) fernab der Anbauteil (12) aufeinandertreffen.

## Claims

1. One-piece cast component (10) with at least one integrated fixture (12), comprising
- at least one axle (20) rigidly connected to the fixture (12);
- a casing (22) surrounding the axle (20) without contact and at least partially;
- wherein the axle (20) is arranged in the axial direction between two axial connecting bridges (26) and is rigidly connected to the casing (22) via these bridges;
- wherein the axle (20) is arranged in the radial direction between a plurality of radial connecting bridges (34) and is rigidly connected to the casing (22) via these webs;
- wherein the connecting bridges (26, 34) are dimensioned such that only these break at respective predetermined breaking points when the fixture (12) is first pivoted relative to the casing (22) and thereafter the fixture (12) together with the axle (20) is mounted pivotably relative to the casing (22), wherein the regions of the connecting bridges remaining on the casing (22) after breaking prevent removal of the axle (20) from the casing (22).

2. One-piece cast component (10) according to claim 1,
**characterized in that**
at least the axle (20), the casing (22) and the connecting bridges (26, 34) have no undercuts in relation to a predetermined demolding direction from a tool mold.

3. One-piece cast component (10) according to claim 1 or 2,
**characterized in that**
the cast component (10) has a latching mechanism which is designed to hold the fixture (12) in at least one predetermined swivel position.

4. One-piece cast component (10) according to claim 3,
**characterized in that**
the latching mechanism comprises a lug on the axle (20), which latches with a mating contour of the casing (22) in the predetermined swivel position of the fixture (12).

5. One-piece cast component (10) according to one of the preceding claims, **characterized in that**
the one-piece cast component (10) is made of a plastic, a fiber-reinforced plastic and/or a flameproofing material.

6. One-piece cast component (10) according to one of the preceding claims, **characterized in that**
- the cast component (10) has two of the axes (20), which are axially spaced apart and aligned with one another and are each rigidly connected to the fixture (12);
- the casing (22) has two casing areas (24) which are marked out from one another and which each surround the axles (20) without contact and at least partially;
- the cast component (10) has four of the axial connecting bridges (26), wherein the axles (20) are each arranged in the axial direction between two of the axial connecting bridges (26) and are rigidly connected to the respective casing areas (24) via these;
- the axles (20) are each arranged in the radial direction between several of the radial connecting bridges (34) and are rigidly connected to the respective casing areas (24) via these.

7. One-piece cast component (10) according to claim 6,
**characterized in that**
- the casing areas (24) are separated from one another by a common central zone (28) of the casing (22) and are delimited by respective outer areas (30) of the casing(22);
- on a front side (16) of the cast component (10), the radial connecting bridges (34) are arranged exclusively on the outer zones (30);
- on a rear side (36) of the cast component (10), the radial connecting bridges (34) are arranged exclusively at the center zone (28).

8. Process for producing a cast component (10) with an integrated fixture (12) according to one of the preceding claims, in which at least one casting material is introduced into a cavity enclosed between two mold halves and the cast component (10) is produced with curing of the at least one casting material, at least the axle (20), the casing (22) and the connecting bridges (26, 34) being produced without undercuts with respect to a predetermined demolding direction.

9. Process according to claim 8,
**characterized in that**
the cast component (10) is manufactured by means of an injection molding or vacuum casting.

10. Method according to claim 8 or 9,
**characterized in that**
- the cast component (10) is produced from a first and second cast material which have different properties;
- the first casting material is fed into the cavity at a first point (40), which is arranged at a distance from the fixture (12) to be produced;
- the second casting material is injected in a second point (42) of the cavity, which is arranged in the area of the fixture (12) to be produced;
- the injection of the casting materials is controlled in such a way that the respective flow fronts of the casting materials meet in an area of the cast component (10) far away from the fixture (12).

## Revendications

1. Pièce moulée d'une seule pièce (10) avec au moins une pièce rapportée intégrée (12), comprenant
- au moins un axe (20) relié de manière rigide à la pièce rapportée (12) ;
- une enceinte (22) entourant sans contact et au moins partiellement l'axe (20) ;
- l'axe (20) étant disposé dans la direction axiale entre deux entretoises de liaison axiales (26) et étant relié rigidement par celles-ci à l'encapsulage (22) ;
- l'axe (20) étant disposé dans la direction radiale entre plusieurs entretoises de liaison radiales (34) et étant relié rigidement par celles-ci à l'encapsulation (22) ;
- les entretoises de liaison (26, 34) étant dimensionnées de telle sorte que seules celles-ci se rompent en des points de rupture respectifs lors d'un premier pivotement de la pièce rapportée (12) par rapport à l'enceinte (22) et qu'ensuite la pièce rapportée (12) est montée avec l'axe (20) de manière à pouvoir pivoter par rapport à l'enceinte (22), les zones des entretoises de liaison restant sur l'enceinte (22) après la rupture empêchant un retrait de l'axe (20) de l'enceinte (22).

2. Pièce moulée d'une seule pièce (10) selon la revendication 1,
**caractérisé en ce que**
au moins l'axe (20), l'enceinte (22) et les entretoises de liaison (26, 34) ne présentent pas de contre-dépouilles par rapport à une direction de démoulage prédéfinie à partir d'un moule.

3. Pièce moulée d'une seule pièce (10) selon la revendication 1 ou 2,
**caractérisé en ce que**
l'élément moulé (10) comprend un mécanisme d'encliquetage conçu pour maintenir l'élément rapporté (12) dans au moins une position de pivotement prédéterminée.

4. Pièce moulée d'une seule pièce (10) selon la revendication 3,
**caractérisé en ce que**
le mécanisme d'encliquetage comprend un ergot sur l'axe (20) qui, dans la position de pivotement prédéfinie de la pièce rapportée (12), s'encliquette avec un contre-contour de l'enceinte (22).

5. Pièce moulée d'une seule pièce (10) selon l'une des revendications précédentes, **caractérisé en ce que**
le composant moulé d'une seule pièce (10) est fabriqué à partir d'une matière plastique, d'une matière plastique renforcée par des fibres et/ou d'un matériau ignifuge.

6. Pièce moulée d'une seule pièce (10) selon l'une des revendications précédentes, **caractérisé en ce que**
- le composant moulé (10) comprend deux desdits axes (20) qui sont axialement espacés et alignés l'un par rapport à l'autre et qui sont respectivement reliés de manière rigide au composant rapporté (12) ;
- l'enceinte (22) présente deux zones d'enceinte (24) délimitées l'une par rapport à l'autre, qui entourent respectivement sans contact et au moins partiellement les axes (20) ;
- le composant moulé (10) comporte quatre desdites entretoises de liaison axiales (26), lesdits axes (20) étant respectivement disposés dans la direction axiale entre deux desdites entretoises de liaison axiales (26) et étant reliés rigidement par celles-ci aux zones d'encapsulation respectives (24) ;
- les axes (20) sont respectivement disposés dans la direction radiale entre plusieurs des entretoises de liaison radiales (34) et sont reliés rigidement par celles-ci aux zones d'encapsulation respectives (24).

7. Pièce moulée d'une seule pièce (10) selon la revendication 6,
**caractérisé en ce que**
- les zones de confinement (24) sont séparées les unes des autres par une zone centrale commune (28) du confinement (22) et sont délimitées par des zones extérieures respectives (30) du confinement (22) ;
- sur une face avant (16) de l'élément de construction coulé (10), les barrettes de liaison radiales (34) sont disposées exclusivement sur les zones extérieures (30) ;
- sur une face arrière (36) du composant coulé (10), les entretoises de liaison radiales (34) sont disposées exclusivement sur la zone centrale (28).

8. Procédé de fabrication d'une pièce moulée (10) avec une pièce rapportée (12) intégrée selon l'une des revendications précédentes, dans lequel au moins un matériau de coulée est introduit dans une cavité enfermée entre deux moitiés de moule et la pièce moulée (10) est fabriquée en durcissant ledit au moins un matériau de coulée, au moins l'axe (20), l'enceinte (22) et les entretoises de liaison (26, 34) étant fabriqués sans contre-dépouille par rapport à une direction de démoulage prédéfinie.

9. Procédé selon la revendication 8,
**caractérisé en ce que**
le composant moulé (10) est fabriqué au moyen d'un procédé de moulage par injection ou de moulage sous vide.

10. Procédé selon la revendication 8 ou 9,
**caractérisé en ce que**
- le composant coulé (10) est fabriqué à partir d'un premier et d'un deuxième matériau de coulée qui présentent des propriétés différentes ;
- le premier matériau de coulée est amené à un premier endroit (40) de la cavité, qui est situé à distance de la pièce rapportée (12) à fabriquer ;
- le deuxième matériau de coulée est amené à un deuxième endroit (42) de la cavité, qui est disposé dans la zone de la pièce rapportée (12) à fabriquer ;
- l'introduction des matériaux de coulée est commandée de telle sorte que des fronts d'écoulement respectifs des matériaux de coulée se rencontrent dans une zone du composant de coulée (10) éloignée de la pièce rapportée (12).
